# EUROPEAN PATENT APPLICATION

(11) **EP 4 411 889 A1**
(43) Date of publication of application: **07.08.2024**
(21) Application number: 22876167.2
(22) Date of filing: 27.09.2022
(51) Int. Cl.: H01M 4/525, C01G 53/00, H01M 4/505, H01M 10/052

(54) **POSITIVE ELECTRODE FOR SECONDARY BATTERY, AND SECONDARY BATTERY**

(30) Priority: 28.09.2021 JP 2021158411
(71) Applicant: Panasonic Intellectual Property Management Co., Ltd., Osaka-shi, Osaka 571-0057 (JP)
(72) Inventor: KAWADA, Hiroshi, Kadoma-shi, Osaka 571-0057 (JP); FUKUTOME, Daiki, Kadoma-shi, Osaka 571-0057 (JP)
(74) Representative: Novagraaf International SA
(86) International application number: PCT/JP2022/035819
(87) International publication number: WO 2023/054300

(57) **Abstract**

A positive electrode active material for a secondary battery includes a lithium-transition metal composite oxide, 90 at.% or more of metals other than lithium contained in the lithium-transition metal composite oxide being an element M1, the element M1 being at least one selected from the group consisting of Ni, Co, Mn, and Al, 0.05 at.% or more and 1 at.% or less of metals other than lithium contained in the lithium-transition metal composite oxide being tungsten (W), and a ratio W2/W1 = α of a tungsten content W2 at a surface of the lithium-transition metal composite oxide to a tungsten content W1 in a whole lithium-transition metal composite oxide being in a range of 0 < α < 0.1.

## Description

### [Technical Field]

The present disclosure relates to a secondary battery, and particularly relates to an improvement of a positive electrode used for a secondary battery.

### [Background Art]

Secondary batteries, especially lithium-ion secondary batteries, have high output and high energy density and are therefore expected as power sources for small consumer applications, power storage devices, and electric cars. As a positive electrode active material for a lithium-ion secondary battery, a composite oxide of lithium and a transition metal is used.

Patent Literature 1 proposes a positive electrode active material for a nonaqueous electrolyte secondary battery. The positive electrode active material is constituted of secondary particles each formed by aggregation of a plurality of primary particles and having voids inside, and includes lithium-nickel composite oxide particles having a layered crystal structure and having a composition represented by Li_{z}Ni_{1-x-y}CoₓM_{y}WₐO_{2+α}, where 0 ≤ x ≤ 0.35, 0 ≤ y ≤ 0.35, 0.95 ≤ z ≤ 1.30, 0 < a ≤ 0.03, 0 ≤ α ≤ 0.15, and M is at least one selected from the group consisting of Mg, Al, Ca, Ti, V, Cr, Mn, Nb, Zr, and Mo. The secondary particle has at its surface and inside a lithium-tungsten compound containing tungsten and lithium, the lithium-tungsten compound is present on at least part of surfaces of the primary particles, and the amount of lithium contained in a lithium compound other than the lithium-tungsten compound present on the surfaces of primary particles is 0.05 mass% or less, relative to the whole amount of lithium-nickel composite oxide particles.

Patent Literature 2 proposes a positive electrode active material for a nonaqueous electrolyte secondary battery, including a lithium-nickel-cobalt-manganese composite oxide containing tungsten. The positive electrode active material has a core portion and a coating portion coating the core portion. The core portion has tungsten distributed unevenly in its surface layer, and the coating portion has tungsten distributed unevenly in its surface layer. The atomic ratio (Ni/Mn) of nickel (Ni) to manganese (Mn) in the core portion is 1.3 to 8.0, and the atomic ratio (Mn/(Ni+Co+Mn)) of manganese (Mn) to the sum of nickel (Ni), cobalt (Co), and manganese (Mn) is more than 0.33. The amount of tungsten contained in the core portion is 0.1 to 1.0 mol%, and the amount of tungsten contained in the coating portion is 0.1 to 0.5 mol%.

### [Citation List]

### [Patent Literature]

Patent Literature 1: Japanese Patent Application Publication No. 2017-84628
Patent Literature 2: Japanese Patent Application Publication No. 2017-33641

### [Summary of Invention]

### [Technical Problem]

It is known that, when tungsten is contained in the positive electrode active material as proposed in Patent Literatures 1 and 2, the reaction resistance of the positive electrode is reduced. However, W has a tendency to dissolve into the nonaqueous electrolyte from the surface of the positive electrode active material within the battery and form a film on the surface of the negative electrode active material. The formation of the film causes the battery internal resistance to rise and the irreversible capacity to increase. Therefore, the capacity gradually decreases with repeated charge-discharge cycles.

### [Solution to Problem]

One aspect of the present disclosure relates to a positive electrode active material for a secondary battery, including: a lithium-transition metal composite oxide, 90 at.% or more of metals other than lithium contained in the lithium-transition metal composite oxide being an element M1, the element M1 being at least one selected from the group consisting of Ni, Co, Mn, and Al, 0.05 at.% or more and 1 at.% or less of metals other than lithium contained in the lithium-transition metal composite oxide being tungsten (W), and a ratio W2/W1 = α of a tungsten content W2 at a surface of the lithium-transition metal composite oxide to a tungsten content W1 in a whole lithium-transition metal composite oxide being in a range of 0 < α < 0.1.

Another aspect of the present disclosure relates to a secondary battery, including: a positive electrode; a separator; a negative electrode facing the positive electrode with the separator interposed between the positive electrode and the negative electrode; and a nonaqueous electrolyte, wherein the positive electrode includes the above-described positive electrode active material for a secondary battery.

### [Advantageous Effects of Invention]

According to the positive electrode active material for a secondary battery of the present disclosure, it is possible to realize a nonaqueous electrolyte secondary battery excellent in capacity retention rate.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

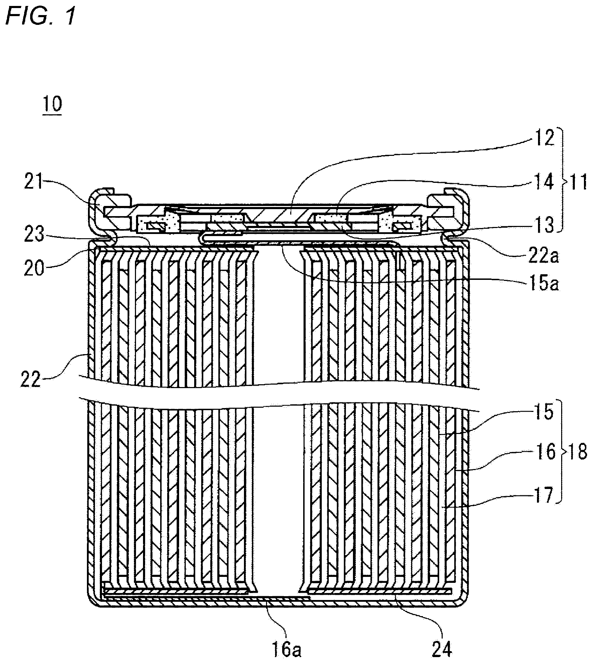

[FIG. 1] A longitudinal cross-sectional view of a secondary battery according to one embodiment of the present disclosure.

### [Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, the phrase "a numerical value A to a numerical value B" means to include the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit. When a plurality of materials are mentioned as examples, one kind of them may be selected and used singly, or two or more kinds of them may be used in combination.

The present disclosure encompasses a combination of matters recited in any two or more claims selected from plural claims in the appended claims. In other words, as long as no technical contradiction arises, matters recited in any two or more claims selected from plural claims in the appended claims can be combined.

In the following description, the term "contains" or "includes" is an expression that encompasses "contains (or includes)", "substantially consists of', and "consists of'.

### [Positive electrode active material]

A positive electrode active material for a secondary battery according to an embodiment of the present disclosure includes a lithium-transition metal composite oxide. The lithium-transition metal composite oxide is an oxide containing lithium (Li) and a transition metal, and may contain a metal element other than transition metals. The lithium-transition metal composite oxide develops capacity through absorption and release of lithium ions thereinto and therefrom. The lithium-transition metal composite oxide has, for example, a layered rock-salt type crystal structure.

Ninety at.% or more of metals other than lithium contained in the lithium-transition metal composite oxide are an element M1. The element M1 may include at least one selected from the group consisting of Ni, Co, Mn, and Al. In particular, when the element M1 includes Ni and Mn, a lithium-transition metal composite oxide having high capacity and excellent thermal stability can be obtained at low cost.

Furthermore, 0.05 at.% or more and 1 at.% or less of metals other than lithium contained in the lithium-transition metal composite oxide are tungsten (W). By adding tungsten to the lithium-transition metal composite oxide, the reaction resistance of the positive electrode can be reduced. W is contained inside the lithium-transition metal composite oxide and also is present at the surface of the lithium-transition metal composite oxide. The W contained inside the lithium-transition metal composite oxide may be incorporated into the major crystal structure of the lithium-transition metal composite oxide. The W contained inside the lithium-transition metal composite oxide may be distributed unevenly in the surface layer of the lithium-transition metal composite oxide. On the other hand, the W present at the surface of the lithium-transition metal composite oxide, without being incorporated into the major crystal structure of the lithium-transition metal composite oxide, may be present as a compound having another crystal structure or an amorphous structure. For example, the W present at the surface of the lithium-transition metal composite oxide may be lithium tungstate, sodium tungstate, calcium tungstate, tungsten oxide, and the like.

The ratio W2/W1 = α of a tungsten content W2 at the surface of the lithium-transition metal composite oxide to a tungsten content W1 in the whole lithium-transition metal composite oxide is in a range of 0 < α < 0.1, may be 0.005 < α < 0.1, and may be 0.005 < α < 0.05. When the tungsten content at the surface of the lithium-transition metal composite oxide is reduced until satisfying the above range, the leaching of W from the surface of the positive electrode active material is significantly reduced while the effect by W of reducing the reaction resistance of the positive electrode is sufficiently ensured. It is therefore considered that almost no film will be formed on the surface of the negative electrode active material. Thus, the rise in battery internal resistance and the increase in irreversible capacity which are attributed to W can be suppressed, and the capacity retention rate during charge-discharge cycles can be improved.

Here, the tungsten content W1 in the whole lithium-transition metal composite oxide can be measured by, for example, inductively coupled plasma emission spectroscopy (ICP). For example, a sample of the lithium-transition metal composite oxide is completely dissolved in a heated acid solution, followed by filtration to remove the residue in the solution, and then, analysis by ICP, to measure the spectral intensity of W. Subsequently, a calibration curve is drawn using a commercially available standard solution of W, to calculate a tungsten content W1 (mol/g) per unit mass in the lithium-transition metal composite oxide. That is, the tungsten content W1 reflects the sum of the W contained inside the lithium-transition metal composite oxide and the W present at the surface of the lithium-transition metal composite oxide.

On the other hand, the tungsten content W2 at the surface of the lithium-transition metal composite oxide can be determined by immersing 2 g of the lithium-transition metal composite oxide in 10 g of an aqueous NaOH solution (NaOH concentration = 0.1 mol/L), and stirring together at 45 °C for 1 hour at 300 rpm, and then, analyzing the amount of W leached out into the NaOH aqueous solution by ICP, to calculate a tungsten content W2 (mol/g) per unit mass at the surface of the lithium-transition metal composite oxide.

The lithium-transition metal composite oxide has a composition represented by, for example, a formula (1): Li₁₊ₓM1_{1-z}M2_{z}O_{2+β}, where -0.02 ≤ β ≤ 0.04. The element M2 includes at least tungsten. As described above, the element M1 is at least one selected from the group consisting of Ni, Co, Mn, and Al, and preferably contains Ni and Mn. In this case, 80 at.% or more and 100% or less of M1 may be Ni and Mn. The element M2 may further include, in addition to tungsten, at least one selected from the group consisting of Ti, Zr, Nb, Ta, Mo, Sb, Bi, Ca, and Sr. Here, the formula (1) satisfies 0.02 < x < 0.07 and 0.0005 < z < 0.1.

In the formula (1), the range of 1+x indicating the amount of Li increases or decreases during charging and discharging. In the condition of a powder form of positive electrode active material as a raw material for the positive electrode (or in a discharged condition), 0.02 < x < 0.07 is satisfied. That is, the lithium-transition metal composite oxide represented by the formula (1) is in slight excess of lithium. When the element M1 includes Ni and Mn as a major component (e.g., when 80 at.% or more and 100% or less of the element M1 is Ni and Mn), a lithium-transition metal composite oxide which contains excess lithium to the extent satisfying 0.02 < x < 0.07 is highly stable, and is advantageous for improving the capacity retention rate. When 0.02 < x is satisfied, the capacity is significantly improved. When x < 0.07 is satisfied, the rise in resistance is suppressed, and the gas generation becomes unlikely to occur.

In the formula (1), it suffices that the range of z indicating the amount of the element M2 containing at least W may satisfy 0.0005 < z < 0.1, but in view of including a sufficient amount of W in the lithium-transition metal composite oxide, 0.001 ≤ z < 0.1 is desirable, and 0.003 ≤ z < 0.1 is more desirable. In this case, W may be the major component of the element M2, and, for example, 80 at.% or more and 100 % or less of the element M2 may be W. In view of further increasing the capacity, z ≤ 0.05 is more desirable, and z ≤ 0.01 is further more desirable.

In the 2+β indicating the amount of oxygen in the formular (1), β indicates the fluctuation of the oxygen amount. When the lithium-transition metal composite oxide becomes slightly excess in lithium, the oxygen amount slightly fluctuates from the stoichiometric value 2 in LiNiO₂ and the like.

The lithium-transition metal composite oxide may have a composition represented by, for example, a formula (2): Li₁₊ₓNi_{y}M3_{1-y-z}M2_{z}O_{2+β}. M3 is at least one selected from the group consisting of Co, Mn, and Al. The formula (2) represents the case where the element M1 essentially includes Ni in the formula (1). When 0.7 < y < 0.95 is satisfied, a lithium-transition metal composite oxide having high capacity and excellent thermal stability can be obtained. 0.7 < y ≤ 0.9 may be satisfied, and 0.75 ≤ y ≤ 0.85 may be satisfied. In this case, M3 desirably contains Mn as a major component, and, for example, 80 at.% or more and 100 % or less of the element M3 may be Mn. In view of further increasing the capacity, 0.0005 < z < 0.1 is desirable.

The lithium-transition metal composite oxide may have a composition represented by, for example, a formula (3): (1-x)LiM1_{1-z}M2_{z}O₂+xLi₂MnO₃. The ranges of x and z are as described above. The lithium-transition metal composite oxide may be, for example,

(1-x)Li(Ni_{0.8}Mn_{0.2})_{1-z}W_{z}O₂+xLi₂MnO₃.

Among the elements M1, particularly Co is expensive. On the other hand, in the present disclosure, it is not necessary to use Co as the element M1, and even containing substantially no Co, the lithium-transition metal composite oxide can serve as a positive electrode active material having high capacity and excellent thermal stability. For example, when the Co content is 1000 ppm or less of the mass of the metals other than lithium, this can be said as containing substantially no Co.

### [Method for producing positive electrode active material]

An example of a method for producing a lithium-transition metal composite oxide will be described below.

The production method according to an example includes a step (i) of preparing a hydroxide containing at least an element M1, a step (ii) of converting the obtained hydroxide into an oxide, and a step (iii) of mixing the obtained oxide with a tungsten compound and a lithium compound, followed by firing, to give a lithium-transition metal composite oxide, and a step (iv) of washing the lithium-transition metal composite oxide.

In the step (i), for example, an alkaline solution, such as sodium hydroxide, is added dropwise into a solution of a compound of an element M1 under stirring, to adjust the pH of the solution to the alkaline side (e.g., 8.5 to 12.5), thereby to allow a hydroxide containing the element M1 to precipitate (co-precipitate). For example, when a Ni compound and a Mn compound are used as the compound of the metal element M1, a composite hydroxide containing Ni and Mn can be obtained. Here, a compound of an element M2 may be added to the solution. In this case, a composite hydroxide containing the elements M1 and M2 can be obtained. The compounds are preferably in the form of a salt. Examples of the salt include a sulfate and a nitrate, but are not limited thereto.

In the step (ii), the hydroxide is converted into an oxide by firing. Although not particularly limited thereto, the firing temperature is, for example, 300 °C to 600 °C. The firing atmosphere may be air, oxygen, and the like. For example, a composite hydroxide containing Ni and Mn may be obtained by firing a composite oxide containing Ni and Mn in air.

In the step (iii), first, the oxide obtained in the step (ii) is mixed with a tungsten compound (or salt) and a lithium compound (or salt), to obtain a mixture. In this process, a compound (or salt) of an element M2 may be mixed.

A mixture in excess of lithium may be obtained by setting the atomic ratio of lithium to the metals other than lithium contained in the mixture to more than 1. The atomic ratio of lithium to the metals other than lithium may be set to more than 1.02 and less than 1.07.

Examples of the lithium compound include Li₂CO₃, LiOH, Li₂O₂, Li₂O, LiNO₃, LiNO₂, Li₂SO₄, LiOH·H₂O, LiH, and LiF.

Examples of the tungsten compound include WO₃, Li₂WO₄, Na₂WO₄, CaWO₄, and WO₂.

Next, the mixture is fired at a predetermined temperature for a predetermined time, to produce a lithium-transition metal composite oxide. Firing can be a multi-stage firing process. For example, a first firing step of firing at a first temperature-raising rate to a first set temperature of 450 °C to 680 °C under an oxygen flow, and a second firing step of firing the fired product obtained in the first firing step at a second temperature-raising rate to a second set temperature of more than 680 °C and 800 °C or less under an oxygen flow may be performed. Firing is performed, for example, in an oxygen flow with an oxygen concentration of 60% or more.

In the step (iv), the obtained lithium-transition metal composite oxide is washed with a sufficient amount of water. By adjusting the extent to which it is washed, a ratio W2/W1 = α of a tungsten content W2 at the surface of the lithium-transition metal composite oxide to a tungsten content W1 in the whole lithium-transition metal composite oxide is controlled to fall within the range of 0.005 < α < 0.1.

The lithium-transition metal composite oxide can form secondary particles each formed by aggregation of a plurality of primary particles. The average particle diameter (D50: particle diameter at 50% cumulative volume measured by a laser diffraction particle size distribution analyzer) of the lithium-transition metal composite oxide is, for example, 2 µm or more and 20 µm or less.

W may be unevenly distributed near the surfaces of the primary particles of the lithium-transition metal composite oxide (e.g., in a near-surface region within 30 nm from the surface of each primary particle). However, the amount of W present in the outermost surface regions of the primary particles is sufficiently reduced by washing. The distribution of W in the particles of the lithium-transition metal composite oxide can be analyzed by TEM-EDX or the like.

### [Nonaqueous electrolyte secondary battery]

The secondary battery includes a positive electrode, a separator, a negative electrode facing the positive electrode with a separator interposed between the positive electrode and the negative electrode, and a nonaqueous electrolyte. The positive electrode includes the above lithium-transition metal composite oxide as a positive electrode active material.

FIG. 1 is a longitudinal cross-sectional view of a cylindrical nonaqueous electrolyte secondary battery according to one embodiment of the present disclosure. The present disclosure, however, is not limited to the following configuration. A nonaqueous electrolyte secondary battery 10 includes an electrode group 18, a nonaqueous electrolyte (not shown), and a bottomed cylindrical battery can 22 housing them. A sealing body 11 is crimped onto the opening of the battery can 22, with a gasket 21 interposed therebetween. This seals the inside of the battery. The sealing body 11 has a valve body 12, a metal plate 13, and an annular insulating member 14 interposed between the valve body 12 and the metal plate 13. The valve body 12 and the metal plate 13 are connected to each other at their respective centers. A positive electrode lead 15a led out from the positive electrode plate 15 is connected to the metal plate 13. Thus, the valve body 12 functions as an external terminal of the positive electrode. A negative electrode lead 16a led out from the negative electrode plate 16 is connected to the bottom inner surface of the battery can 22. An annular groove 22a is formed in the vicinity of the open end of the battery can 22. A first insulating plate 23 is disposed between one end surface of the electrode group 18 and the annular groove 22a. A second insulating plate 24 is disposed between the other end surface of the electrode group 18 and the bottom of the battery can 22. The electrode group 18 is formed by winding a positive electrode plate 15 and a negative electrode plate 16 with a separator 17 interposed therebetween.

The positive electrode includes, for example, a positive electrode current collector, and a positive electrode mixture layer formed on a surface of the positive electrode current collector. The positive electrode mixture includes a positive electrode active material as an essential component, and may include a binder, a conductive agent, and the like as optional components.

The negative electrode includes, for example, a negative electrode current collector, and a negative electrode mixture layer formed on a surface of the negative electrode current collector. The negative electrode mixture includes a negative electrode active material as an essential component, and may include a binder, a thickener, and the like as optional components.

Examples of the negative electrode active material include carbon materials, silicon, silicon compounds, metal lithium, and lithium alloys. Examples of the carbon materials include graphite (e.g., natural graphite, artificial graphite), and amorphous carbon.

The nonaqueous electrolyte may be a liquid electrolyte of a solute such as a lithium salt dissolved in a nonaqueous solvent, or may be a solid electrolyte.

Usually, a separator is interposed between the positive electrode and the negative electrode. The separator is excellent in ion permeability and has moderate mechanical strength and electrically insulating properties. The separator may be a microporous thin film, a woven fabric, a nonwoven fabric, and the like. As the material of the separator, a polyolefin, such as polypropylene and polyethylene, is preferred.

In a nonaqueous electrolyte secondary battery, W may be partially leached out from the surface of the positive electrode active material (lithium-transition metal composite oxide) into the nonaqueous electrolyte within the battery. The W leached out into the nonaqueous electrolyte moves to the negative electrode and is reduced on the surface of the negative electrode active material. However, when the ratio W2/W1 = α of the tungsten content W2 to the tungsten content W1 is in the range of 0.005 < α < 0.1, such move of W to the negative electrode is significantly suppressed. As a result, the ratio Wn/Wp of the amount Wn of tungsten contained in the negative electrode and the amount Wp of tungsten contained in the positive electrode per unit facing area between the positive electrode and the negative electrode can satisfy 0 ≤ Wn/Wp < 0.07, or 0.02 < Wn/Wp < 0.07.

The Wn/Wp ratio can fall in the above range even after repeated charge-discharge cycles (e.g., 50 or more cycles). For example, the amounts of W contained in the positive electrode and in the negative electrode taken out by disassembling a battery in a fully discharged state after 50 charge-discharge cycles may be analyzed by ICP. For example, the negative electrode mixture of a size corresponding to unit area is peeled off from the negative electrode mixture layer facing the positive electrode mixture layer, to analyze the amount of tungsten Wn (mol/cm²) by ICP. Also, the positive electrode mixture of a size corresponding to unit area is peeled off from the positive electrode mixture layer facing the negative electrode mixture layer, to analyze the amount of tungsten Wp (mol/cm²) by ICP. Then, the Wn/Wp ratio can be determined.

The present disclosure will be more specifically described below with reference to Examples and Comparative Examples. It is to be noted, however, that the present disclosure is not limited to the following Examples.

### <Example 1>

### [Synthesis of lithium-transition metal composite oxide]

First, a composite hydroxide (Ni_{0.8}Mn_{0.2}(OH)₂) containing Ni and Mn in a molar ratio of 8:2 was synthesized by coprecipitation method. The obtained composite hydroxide was heated in air at 700 °C for 2 hours, to convert it into a composite oxide (Ni_{0.8}Mn_{0.2}O₂). The obtained composite oxide (Ni_{0.8}Mn_{0.2}O₂) was mixed with 0.004 mol of WO₃ per 1 mol of Ni and Mn in total, which was further mixed with 1.02 mol of lithium hydroxide monohydrate (LiOH·H₂O) per 1 mol of Ni, Mn, and W in total, and the obtained mixture was fired. Specifically, the mixture was fired at a temperature raising rate of 2.0 °C/min from room temperature to 650 °C under an oxygen flow with an oxygen concentration of 95% (flow rate of 5 L/min per 1 kg of mixture), and then, fired at a temperature raising rate of 1 °C/min from 650 °C to 780 °C. Subsequently, 1250 g of the lithium-transition metal composite oxide after firing was put into 1 L of water and washed with water, followed by solid-liquid separation, and then drying. With respect to the lithium-transition metal composite oxide after drying, the tungsten content W1 in the whole lithium-transition metal composite oxide and the tungsten content W2 at the surface of the lithium-transition metal composite oxide were determined by the already-described method, to calculate α = W2/W1, which was found to be 0.032 (i.e., the ratio of the amount of tungsten present at the surface to the whole amount of tungsten was 3.2%).

### [Production of positive electrode]

The lithium-transition metal composite oxide after drying, acetylene black, and polyvinylidene fluoride (PVdF) were mixed in a mass ratio of 100:0.75:0.6, and N-methyl-2-pyrrolidone (NMP) was used as a dispersion medium, to prepare a positive electrode slurry. The positive electrode slurry was applied to one surface of an aluminum foil serving as a positive electrode current collector, the applied film was dried, and then rolled, to form a positive electrode mixture layer on one surface of the aluminum foil.

### [Production of negative electrode]

A sheet of lithium metal was attached to one surface of an electrolytic copper foil serving as a negative electrode current collector, to produce a negative electrode (counter electrode).

### [Preparation of nonaqueous electrolyte]

LiPF₆ was added as a lithium salt to a mixed solvent containing fluoroethylene carbonate (FEC), ethyl methyl carbonate (EMC), and dimethyl ether (DME) in a volume ratio of 4:1:15, to prepare a nonaqueous electrolyte. The concentration of LiPF₆ in the nonaqueous electrolyte was set to 1.0 mol/liter.

### [Production of evaluation cell]

The above positive electrode to which an Al lead was attached, the counter electrode (Li electrode) to which a Ni lead was attached, and the above nonaqueous electrolyte were used to constitute a cell A1 for positive electrode evaluation. Specifically, the positive electrode and the counter electrode were stacked with a polyethylene separator interposed therebetween such that the positive electrode mixture layer and the lithium metal foil faced each other, to form an electrode group. The electrode was housed in a pouch-like outer body formed of an Al laminate film, into which the nonaqueous electrolyte was injected, to impregnate the positive electrode mixture layer with the nonaqueous electrolyte. Then, the opening of the outer body was heat-sealed. Part of the Al lead and part of the Ni lead were exposed outside from the outer body. Here, the production of evaluation cell was carried out in a dry air atmosphere with a dew point of -60 °C or less. The evaluation cell was secured under pressure at 3.2 MPa.

### [Evaluation]

### (Discharge capacity after 50 cycles)

With respect to the completed cell, in a 25 °C environment, a constant-current charging was performed at a current of 0.3 It until the voltage reached 4.4 V, and then, a constant-voltage charging was performed at a constant voltage of 4.4 V until the current reached 0.02 It. Subsequently, a constant-current discharge was performed at a current of 0.5 It until the voltage reached 2.5V. The rest time between charging and discharging was set to 10 minutes, and a cycle consisting of the above charging and discharging was repeated 50 times. From the discharge capacity at the 50th cycle, the capacity density (mAh/g) of the lithium-transition metal composite oxide used as the positive electrode active material was determined. The results are shown in Table 1.

### (Wn/Wp ratio)

The ratio Wn/Wp of the amount Wn of tungsten contained in the negative electrode to the amount Wp of tungsten contained in the positive electrode per unit facing area between the positive electrode and the negative electrode was determined by the already-described method. The results are shown in Table 1.

### <Example 2>

A positive electrode was prepared, and an evaluation cell A2 was produced and evaluated in the same manner as in Example 1, except that in the synthesis of a lithium-transition metal composite oxide, the composite oxide (Ni_{0.8}Mn_{0.2}O₂) was mixed with 1.04 mol of lithium hydroxide monohydrate (LiOH·H₂O) per 1 mole of Ni, Mn, and W in total, and 1750 g of the lithium-transition metal composite oxide after firing was put into 1 L of water. The α = W2/W1 was calculated, which was found to be 0.039 (3.9%).

### <Example 3>

A positive electrode was prepared, and an evaluation cell A3 was produced and evaluated in the same manner as in Example 2, except that in the synthesis of a lithium-transition metal composite oxide, 1250 g of the lithium-transition metal composite oxide after firing was put into 1 L of water and washed with water. The α = W2/W1 was calculated, which was found to be 0.031 (3.1%).

### <Example 4>

A positive electrode was prepared, and an evaluation cell A4 was produced and evaluated in the same manner as in Example 2, except that in the synthesis of a lithium-transition metal composite oxide, 750 g of the lithium-transition metal composite oxide after firing was put into 1 L of water and washed with water. The α = W2/W1 was calculated, which was found to be 0.025 (2.5%).

### <<Comparative Example 1>>

A positive electrode was prepared, and an evaluation cell B1 was produced and evaluated in the same manner as in Example 1, except that in the synthesis of a lithium-transition metal composite oxide, the composite oxide (Ni_{0.8}Mn_{0.2}O₂) was mixed with 1.04 mol of lithium hydroxide monohydrate (LiOH·H₂O) per 1 mole of Ni and Mn in total, the composite oxide (Ni_{0.8}Mn_{0.2}O₂) was not mixed with WO₃, and the lithium-transition metal composite oxide after firing was not washed with water.

### <<Comparative Example 2>>

A positive electrode was prepared, and an evaluation cell B2 was produced and evaluated in the same manner as in Example 1, except that in the synthesis of a lithium-transition metal composite oxide, the composite oxide (Ni_{0.8}Mn_{0.2}O₂) was mixed with 1.04 mol of lithium hydroxide monohydrate (LiOH·H₂O) per 1 mole of Ni and Mn in total, and the composite oxide (Ni_{0.8}Mn_{0.2}O₂) was not mixed with WO₃.

### <<Comparative Example 3>>

A positive electrode was prepared, and an evaluation cell B3 was produced and evaluated in the same manner as in Example 1, except that in the synthesis of a lithium-transition metal composite oxide, the composite oxide (Ni_{0.8}Mn_{0.2}O₂) was mixed with 1.04 mol of lithium hydroxide monohydrate (LiOH·H₂O) per 1 mole of Ni and Mn in total, the composite oxide (Ni_{0.8}Mn_{0.2}O₂) was not mixed with WO₃, and after 1250 g of the lithium-transition metal composite oxide after firing was put into 1 L of water and washed with water, the lithium-transition metal composite oxide after firing was mixed with 0.001 mol of WOs per 1 mol of Ni and Mn in total, and heat-treated at 180 °C for 3 hours under vacuum conditions. The α = W2/W1 was calculated, which was found to be 0.52 (52%).

### <<Comparative Example 4>>

A positive electrode was prepared, and an evaluation cell B4 was produced and evaluated in the same manner as in Example 1, except that in the synthesis of a lithium-transition metal composite oxide, the composite oxide (Ni_{0.8}Mn_{0.2}O₂) was mixed with 0.005 mol of WO₃ per 1 mol of Ni and Mn in total, and the lithium-transition metal composite oxide after firing was not washed with water. The α = W2/W1 was calculated, which was found to be 0.35 (35%).

### <<Comparative Example 5>>

A positive electrode was prepared, and an evaluation cell B5 was produced and evaluated in the same manner as in Example 1, except that in the synthesis of a lithium-transition metal composite oxide, the composite oxide (Ni_{0.8}Mn_{0.2}O₂) was mixed with 0.0045 mol of WO₃ per 1 mol of Ni and Mn in total, and the lithium-transition metal composite oxide after firing was wetted by passing water therethrough in an amount corresponding to 10 mass% thereof, and then dried by placing it on a filter paper to remove excess water, followed by drying. The α = W2/W1 was calculated, which was found to be 0.23 (23%).

**[Table 1]**

| | value x | washing with water | W | whole W amount (mol%) | α (%) | discharge capacity after 50 cycles (mAh/g) | Wn/Wp |
|---|---|---|---|---|---|---|---|
| B1 | 0.04 | without | not added | 0 | - | 191.6 | - |
| B2 | 0.04 | 1250 g/L | not added | 0 | - | 192.8 | - |
| B3 | 0.04 | 1250 g/L | added after washing | 0.1 | 52 | 193.8 | 0.095 |
| B4 | 0.04 | without | added before washing | 0.5 | 35 | 193.8 | 0.080 |
| B5 | 0.04 | passing water | added before washing | 0.45 | 23 | 195.0 | 0.077 |
| A1 | 0.02 | 1250 g/L | added before washing | 0.4 | 3.2 | 196.6 | 0.045 |
| A2 | 0.04 | 1750 g/L | added before washing | 0.4 | 3.9 | 201.0 | 0.035 |
| A3 | 0.04 | 1250 g/L | added before washing | 0.4 | 3.1 | 202.1 | 0.035 |
| A4 | 0.04 | 750 g/L | added before washing | 0.4 | 2.5 | 201.7 | 0.034 |

Table 1 shows that when a lithium-transition metal composite oxide obtained by firing a tungsten compound together with a lithium compound and a composite oxide was washed with a sufficient amount of water, the value α was reduced to as low as 10% or less (to further as low as 4% or less), and the capacity retention rate was significantly improved. Furthermore, the capacity retention rate improvement effect was more remarkable when the value x indicating the excess amount of lithium exceeded 0.02. These results had a correlation with the magnitude of the Wn/Wp ratio, too.

### [Industrial Applicability]

With the positive electrode active material for a secondary battery according to the present disclosure, a nonaqueous electrolyte secondary battery with excellent capacity retention can be provided. The secondary battery according to the present disclosure is useful as a main power source for electric cars, hybrid cars, mobile communication devices, portable electronic devices, and the like. The application, however, is not limited thereto.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

10: nonaqueous electrolyte secondary battery, 11: sealing body, 12: valve body, 13: metal plate, 14: insulating member, 15: positive electrode plate, 15a: positive electrode lead, 16: negative electrode plate, 16a: negative electrode lead, 17: separator, 18: electrode group, 21: gasket, 22: battery can, 22a: groove, 23: first insulating plate, 24: second insulating plate, 16: negative electrode plate

## Claims

1. A positive electrode active material for a secondary battery, comprising:
a lithium-transition metal composite oxide,
90 at.% or more of metals other than lithium contained in the lithium-transition metal composite oxide being an element M1, the element M1 being at least one selected from the group consisting of Ni, Co, Mn, and Al,
0.05 at.% or more and 1 at.% or less of metals other than lithium contained in the lithium-transition metal composite oxide being tungsten (W), and
a ratio W2/W1 = α of a tungsten content W2 at a surface of the lithium-transition metal composite oxide to a tungsten content W1 in a whole lithium-transition metal composite oxide being in a range of 0 < α < 0.1.

2. The positive electrode active material for a secondary battery according to claim 1, wherein
the lithium-transition metal composite oxide has a composition represented by a formula (1): Li₁₊ₓM1_{1-z}M2_{z}O_{2+β}, where -0.02 ≤ β ≤ 0.04,
the element M2 includes at least tungsten,
the element M2 may include, in addition to tungsten, at least one selected from the group consisting of Ti, Zr, Nb, Ta, Mo, Sb, Bi, Ca, and Sr, and
0.02 < x < 0.07 and 0.0005 ≤ z < 0.1 are satisfied.

3. The positive electrode active material for a secondary battery according to claim 2, wherein
a composition of the lithium-transition metal composite oxide is represented by a formula (2): Li₁₊ₓNi_{y}M3_{1-y-z}M2_{z}O_{2+β},
M3 is at least one selected from the group consisting of Co, Mn, and Al, and
0.7 < y < 0.95 is satisfied.

4. The positive electrode active material for a secondary battery according to claim 2 or 3, wherein the lithium-transition metal composite oxide has a composition represented by a formula (3): (1-x)LiM1_{1-z}M2_{z}O₂+xLi₂MnO₃.

5. The positive electrode active material for a secondary battery according to any one of claims 1 to 4, containing substantially no Co.

6. A secondary battery, comprising:
a positive electrode; a separator; a negative electrode facing the positive electrode with the separator interposed between the positive electrode and the negative electrode; and a nonaqueous electrolyte, wherein
the positive electrode includes the positive electrode active material for a secondary battery of any one of claims 1 to 5.

7. The secondary battery according to claim 6, wherein a ratio Wn/Wp of an amount Wn of tungsten contained in the negative electrode and an amount Wp of tungsten contained in the positive electrode per unit facing area between the positive electrode and the negative electrode satisfies 0 ≤ Wn/Wp < 0.07.
